# EUROPÄISCHE PATENTANMELDUNG

(11) **EP 2 514 291 A2**
(43) Veröffentlichungstag der Anmeldung: **24.10.2012**
(21) Anmeldenummer: 12163868.8
(22) Anmeldetag: 12.04.2012
(51) Int. Cl.: A01C 7/04

(54) **Einzelkornausbringeinrichtung**

(30) Priorität: 21.04.2011 DE 102011002223
(71) Anmelder: Franz Kleine Vertriebs & Engineering GmbH, 33154 Salzkotten (DE)
(72) Erfinder: Schulte, Reinhold, 33106 Paderborn (DE); Böhle, Michael, 34466 Wolfhagen (DE)
(74) Vertreter: Rehberg Hüppe + Partner

(57) **Zusammenfassung**

Die Erfindung betrifft eine Einzelkornausbringeinrichtung (24), insbesondere Einzelkornsämaschine (6).

Erfindungsgemäß ist eine Führungsfläche (17) mit mindestens einer Öffnung oder einem Schlitz ausgestattet, welche(r) über einen Druckraum (27) mit einem Unterdruck beaufschlagt ist. Diese erfindungsgemäße Ausgestaltung hat zur Folge, dass ein auszubringendes und vereinzeltes Korn (4) an die Führungsfläche (27) angesaugt wird, wodurch ein Umfangswinkelbereich α₂ für die Beruhigung des Korns (4) verkleinert werden kann und/oder eine Erhöhung der Präzision der Ausbringung des Korns (4) erwirkt werden kann.

Die erfindungsgemäße Einzelkornausbringeinrichtung kann Einsatz finden zur Einbringung von Saatgut in einen landwirtschaftlichen Boden.

## Beschreibung

### TECHNISCHES GEBIET DER ERFINDUNG

Die Erfindung betrifft eine Einzelkornausbringeinrichtung, insbesondere eine so genannte Einzelkornsämaschine für das Ausbringen von Körnern in Form von Saatgut oder Samen in der Landwirtschaft. Allerdings ist die Erfindung nicht auf Maschinen eingeschränkt, die zum Säen einzelner Samen dient. Vielmehr findet die Erfindung Einsatz für beliebige Einrichtungen, welche in der Landwirtschaft zum Ausbringen vereinzelter Körner genutzt werden können. Zur Vereinfachung wird im Folgenden allerdings beispielhaft die Erfindung anhand einer Einzelkornsämaschine erläutert. Einzelkornsämaschinen haben zwei Kernfunktionen, nämlich einerseits eine Vereinzelung von Körnern aus einem Vorratsraum mit einer Vielzahl von darin angeordneten Körnern und andererseits eine Ausbringung der Körner aus der Einzelkornsämaschine mit definierter Ausbringgeschwindigkeit, definiertem Ausbringwinkel und definierten Zeitabständen zwischen den ausgebrachten Körnern, um zu gewährleisten, dass die Körner möglichst entlang einer Linie und mit definierten Abständen zum agraren Boden gelangen.

### STAND DER TECHNIK

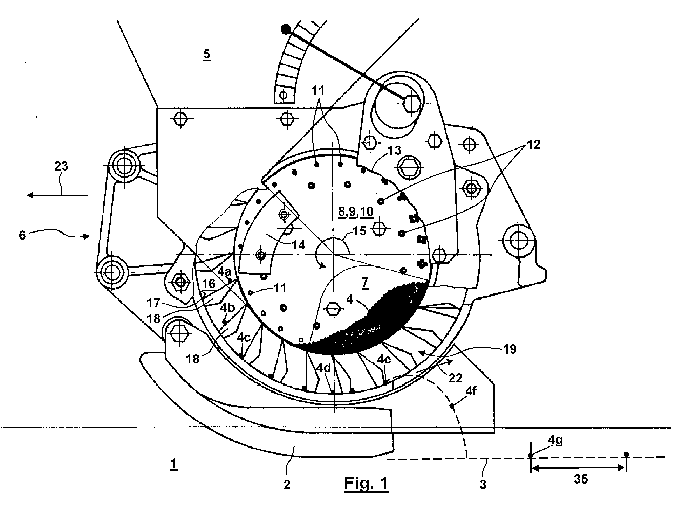

DE 35 41 991 A1 offenbart eine Einzelkornsämaschine, welche teilgeschnitten in einer Seitenansicht in Fig. 1 dargestellt ist. Die Einzelkornsämaschine wird mit einem agraren Fahrzeug über den Boden 1 bewegt, wobei ein Schar 2 eine Furche 3 in den Boden 1 arbeitet, in welche die Körner 4 mittels der Einzelkornsämaschine eingebracht werden sollen. Über einen Einfülltrichter 5 gelangt eine Vielzahl von Körnern 4 in einen im Inneren der Einzelkornsämaschine 6 angeordneten Vorratsraum 7. In dem Vorratsraum 7 rotiert ein Vereinzelungsorgan 8 um eine Rotationsachse, welche vertikal zur Zeichenebene gemäß Fig. 1 und horizontal sowie quer zur Bewegungsrichtung der Einzelkornsämaschine 6 orientiert ist. Für die aus dem Stand der Technik bekannte Ausführungsform ist das Vereinzelungsorgan 8 als Lochscheibe 9 mit scheibenförmigen Grundkörper 10 ausgebildet. Die Lochscheibe 9 dreht sich in Fig. 1 entgegen dem Uhrzeigersinn in eine Bewegungsrichtung 15. Bei einem Radius, für welchen, insbesondere unter Beachtung des Schüttkegels der Körner 4, gewährleistet ist, dass bei diesem Radius eine Ansammlung von Körnern 4 in dem Vorratsraum 7 angeordnet ist, sind mehrere Saugöffnungen 11 gleichmäßig über den Umfang verteilt. Darüber hinaus besitzt die Lochscheibe 9 über den Umfang verteilte Mitnehmer 12, welche bestimmt sind, die in dem Vorratsraum 7 angesammelten Körner zu durchmischen und aufzuwirbeln. Die Saugöffnungen 11 sind mit einer nicht dargestellten Unterdruckquelle verbunden. Bewegt sich die Lochscheibe 9 mit den Saugöffnungen 11 und an diesen anstehendem Unterdruck durch die Körner 4 in dem Vorratsraum 7, werden zunächst mehrere Körner, gemäß Fig. 1 beispielsweise vier Körner (vgl. die Saugöffnungen 11 in 3-Uhr-Position) von der Saugöffnung 11 mitgenommen. Mittels eines Abstreifers 13 kann mit weiterer Verdrehung des Kammerrads 9 die Zahl der Körner 4 im Bereich einer Saugöffnung 11 verringert werden, wobei vorzugsweise am Ende des Abstreifers 13 im Idealfall jeder Saugöffnung 11 lediglich ein einziges Korn zugeordnet ist. Nach dem Passieren des Abstreifers 13 werden über die Lochscheibe 9 mit den Saugöffnungen 11 die Körner 4 zu einem Übergeber 14 transportiert, welcher in grober Näherung in einer 9-Uhr-Position angeordnet ist. Der Übergeber 14 bildet einen Abgabebereich 21. Im Bereich des Übergebers 14 werden die Körner 4 von der Saugöffnung 11 und der Lochscheibe 9 getrennt, was vorzugsweise durch Beseitigung des Unterdrucks im Bereich der Saugöffnungen 11 in diesem Umfangsbereich erfolgt, wobei auch zusätzliche mechanische Elemente zur Wirkung kommen können. Infolge der Trennung des Korns 4 von der Lochscheibe 9 führt das Korn 4 nach dem Übergeber 14 eine tangentiale Bewegung aus, die zur Folge hat, dass das Korn 4 in eine Kammer 16 eintritt, welche radial außen liegend durch eine Führungsfläche 17 begrenzt ist und in Umfangsrichtung begrenzt ist durch Kammerrad-Flügel 18 eines Kammerrads 19. Vorzugsweise ist das Kammerrad 19 drehfest mit der Lochscheibe 9 verbunden. In Fig. 1 ist ein Korn 4a nach dem Ablösen von der Lochscheibe 9 durch den Übergeber 14 mit Eintritt in die Kammer 16 dargestellt. Infolge der Eigengeschwindigkeit des Korns 4a liegt dieses in Umfangsdrehrichtung an einem Kammerrad-Flügel 18 an. Mit weiterer Verdrehung in Umfangsrichtung hat sich ein Korn 4b weiter radial nach außen bewegt, wobei diese Bewegung entlang des in Umfangsbewegungsrichtung vorderen Kammerrad-Flügels 18 erfolgt. Mit weiterer Verdrehung legt sich ein Korn 4c radial nach außen an die Führungsfläche 17 an und bewegt sich ungefähr gleichförmig mit dem Kammerrad-Flügel 18. Infolge einer anschließenden Verlangsamung der Umfangsgeschwindigkeit des Korns löst sich in der 6-Uhr-Stellung ein Korn 4d von dem in Umfangsbewegungsrichtung vorderen Kammerrad-Flügel 18 ab, bis ein Korn 4e mit weiterer Bewegung in Umfangsrichtung zur Anlage an einen in Umfangsbewegungsrichtung hinteren Kammerrad-Flügel 18 kommt. Im Bereich der Körner 4a bis 4e ist mit dem Kammerrad 19 mit dem in diesem Bereich angeordneten Kammerrad-Flügeln 18 sowie der Führungsfläche 17 eine Ausbringeinrichtung 20 gebildet. Der Kammerrad-Flügel 18 dient dann als Auswerfer, mittels dessen dann ein Ausbringen eines Korns 4f aus der Einzelkornsämaschine 6 in eine Ausbringrichtung 22 erfolgt. Mit der durch die Einzelkornsämaschine 6 vorgegebenen Ausbringrichtung 22 und einer vorgegebenen, von der Drehzahl des Kammerrads 19 abhängigen Ausbringgeschwindigkeit bewegt sich das Korn 4f im freien Fall in die Furche 3, wo dieses dann als Korn 4g zum Liegen kommt. Die Einzelkornsämaschine 6 wird gemäß Fig. 1 in eine Fahrtrichtung 23 über den Boden 1 bewegt. Damit die Einzelkornsämaschine Unebenheiten des Bodens 1 folgt, ist vorzugsweise die Einzelkornsämaschine an einer Halterung gehalten, welche über Räder über den Boden rollt. Einzelkornsämaschinen dieser genannten Art finden beispielsweise Einsatz für die Aussaat von Rüben, Sonnenblumen, Sojabohnen, Mais oder anderem Saatgut. An einer unter Umständen variablen Rahmenkonstruktion können hier mehrere Einzelkornsämaschinen mehrreihig, beispielsweise für 6 bis 18 Reihen, gehalten sein. Ebenfalls möglich ist der Einsatz der Einzelkornsämaschine für eine Mulchsaat. Der Antrieb der Rotationsbewegung des Kammerrads erfolgt gemäß DE 35 41 991 A1 durch Abrollen auf dem Boden, während auch Ausgestaltungsformen bekannt sind, bei welchen ein elektrischer Antrieb der Lochscheibe und des Kammerrads erfolgt. Eine erhöhte Automatisierung und Individualisierung kann beispielsweise über eine flexible Teilbreitenschaltung für mehrere Reihen von einer Einzelkornsämaschinen und/oder Steuerung der Ausbringung durch die Einzelkornsämaschinen durch Zusammenwirken mit einem GPS-System, mittels dessen individuell je nach Bodenbeschaffenheit die Saatstärke eingestellt werden kann, erfolgen (vgl. Prospekt "Einzelkornsägerät für Rüben und Sonnenblumen: "MULTICORN", Kverneland Soest GmbH, Veröffentlichungs-Nr.: MC Rb/Sb/900d).

DE 10 2006 031 281 A1 offenbart eine pneumatische Einzelkornsämaschine, bei welcher das Vereinzelungsorgan nicht mit einer Lochscheibe ausgebildet ist, sondern vielmehr als Vereinzelungstrommel. Die Vereinzelungstrommel besitzt mehrere axial nebeneinander liegende Reihen mit gleichförmig über den Umfang verteilten Saugöffnungen zur Aufnahme von Körnern. Der Abgabebereich oder Übergeber zum Trennen der Körner von der Vereinzelungstrommel arbeitet hier auch mit einer Beseitigung des Unterdrucks in den Saugöffnungen. Die Ausbringeinrichtung ist in diesem Fall horizontal orientiert mit trichterförmigen Ausbringleitungen. Hierbei können Körner von Saugöffnungen benachbarter Reihen über Y-förmige Ausbringleitungen zusammengeführt werden. In diesem Fall wird außerhalb der Vereinzelungstrommel mittels eines Gebläses ein Überdruck erzeugt, welcher eine Luftströmung durch die Saugöffnungen zu eine mit dem Inneren der Vereinzelungstrommel gekoppelten Drucksenke zur Folge hat, infolge welcher die Körner zu den Saugöffnungen mitgenommen werden und an diese angepresst werden. Auch hier ist ein Druckgefälle vorhanden mit einem größeren Druck auf der äußeren Seite der Vereinzelungstrommel, welche durch die Körner in dem Vorratsraum bewegt wird, als auf der inneren Seite, worunter im Folgenden ebenfalls ein "Saugen" in Richtung der Saugöffnungen verstanden werden soll.

DE 10 2008 056 534 A1 zeigt den Einsatz einer Einzelkornsämaschine in einem Säaggregat mit einem verschwenkbar am Zugfahrzeug angeordneten Arm und dem Boden folgenden Laufrädern und einem Säschar und einem mit zwei Hälften ausgebildeten Säherz mit Lochscheibe, Druckkammer für die Saugöffnungen und einem Vorratsraum, wobei hier das Ausbringen der vereinzelten Körner ohne Einsatz eines Kammerrads erfolgt, so dass hier die Körner unmittelbar mit dem Beseitigen des Unterdrucks aus den Saugöffnungen in freiem Fall zum Boden gelangen.

DE 30 03 919 C2 offenbart ein Vereinzelungsorgan mit in Umfangsrichtung verteilten Saugöffnungen zur kontinuierlichen Aufnahme und zum temporären Halten vereinzelter Körner aus einem Vorratsraum. Ohne dass eine Übergabe von diesem Vereinzelungsorgan über einen Abgabebereich zu der Ausbringeinrichtung erfolgt, fallen die vereinzelten Körner mit Beseitigung des Unterdrucks in den Saugöffnungen aus diesen und aus einer Auswurföffnung heraus.

Gemäß FR 1 229 027 A erfolgt die druckunterstützte Förderung vereinzelter Körner durch ein Rohrleitungssystem mit einer Führung der Körner durch einen geschlossenen Trichter, wobei ein etwaiges Druckgefälle zur Erzeugung der Förderbewegung der Körner parallel zu den Wandungen des Rohrleitungssystems und des Trichters orientiert sein muss.

### AUFGABE DER ERFINDUNG

Der Erfindung liegt die Aufgabe zugrunde, eine Einzelkornausbringeinrichtung, insbesondere eine Einzelkornsämaschine, hinsichtlich der Ausbringung zu verbessern. Die gewünschten Verbesserungen betreffen hierbei beispielweise eine Verringerung der Schwankung der Ausbringcharakteristik und/oder eine Vergrößerung des Umfangswinkelbereichs für die Möglichkeit der Anordnung oder Erstreckung der Ausbringeinrichtung der Einzelkornausbringeinrichtung.

### LÖSUNG

Die Aufgabe der Erfindung wird erfindungsgemäß mit den Merkmalen des unabhängigen Patentanspruchs 1 gelöst. Weitere bevorzugte erfindungsgemäße Ausgestaltungen sind den abhängigen Patentansprüchen zu entnehmen.

### BESCHREIBUNG DER ERFINDUNG

Die vorliegende Erfindung beruht auf der Erkenntnis, dass in der Praxis die Ausbringung der Körner aus der bekannten Einzelkornsämaschine gemäß Fig. 1 Nachteile hat:
- In der idealisierten Beschreibung der Ausbringung der Körner zu Fig. 1 wurde davon ausgegangen, dass die Körner 4c, 4d und 4e während der Förderung in Umfangsrichtung an der Führungsfläche 17 anliegen. Dies ist in der Praxis nicht der Fall. Die Körner können sich auch radial innenliegend von der Führungsfläche 17 befinden. Dies hat dann aber zur Folge, dass die Körner die Ausbringeinrichtung mit einem veränderten radialen Abstand von der Drehachse des Kammerrads 19 verlassen, woraus eine andere Ausbringgeschwindigkeit und ein anderer "Ausbringradius" resultieren. Dies führt letztendlich zu Unregelmäßigkeiten hinsichtlich der Abstände 35 der ausgebrachten Körner 4.
- Des Weiteren ist nicht zwingend gewährleistet, dass vor dem Ausbringen das Korn 4e zur Anlage kommt an den in Umfangsbewegungsrichtung hinteren Kammerrad-Flügel 18. Ist eine Anlage an diesem Kammerrad-Flügel 18 aber nicht gegeben, verlässt das Korn u. U. ebenfalls das Kammerrad 19 und die Ausbringeinrichtung 20 mit einer unerwünschten Ausbringgeschwindigkeit.
- Des Weiteren ist zu erkennen, dass die Ausbringeinrichtung 20 sich von den Körnern 4a bis 4e über einen Umfangswinkel erstreckt, welcher größer ist als 90°. Des Weiteren erfolgt ein Ausbringen des Korns erst ca. in einer 5-Uhr-Stellung, da eine Art Hangabtriebskraft in der aufsteigenden Führungsfläche 17 ergänzend genutzt werden soll, um das Korn 4e an den in Umfangsbewegungsrichtung hinteren Kammerrad-Flügel 18 anzulegen. Dies hat zur Folge, dass eine Ausbringrichtung 22 nicht vertikal nach unten orientiert ist, so dass die Körner in den Boden "eingeschossen" werden können, sondern die Körner in einem freien Flug entsprechend einer Wurfparabel zum Boden gelangen. Dies hat weitere Unregelmäßigkeiten in den Abständen 35 für die Körner in der Furche 3 zur Folge, was durch die verlängerte Flugzeit, eine vergrößerte Abhängigkeit von Schwankungen hinsichtlich der Ausbringgeschwindigkeit und Ausbringrichtung und/oder nicht erfassten Unebenheiten des Bodens 1 in Fahrtrichtung 23 hinter dem Schar 2 begründet sein kann. Die große Umfangserstreckung der Ausbringeinrichtung 20 ist andererseits erforderlich, um eine Art "Beruhigung" des Korns in der Kammer 16 vor dem Ausbringen herbeizuführen.

Den obigen Beobachtungen wird erfindungsgemäß dadurch Rechnung getragen, dass die Einzelkornausbringeinrichtung mit einer verbesserten Führung im Bereich der Ausbringeinrichtung ausgestattet werden soll, über welche es möglich ist, die Umfangserstreckung der Ausbringeinrichtung zu verringern, die Ausbringrichtung 22 in Richtung eines eher vertikalen "Einschießens" in den Boden zu verändern und/oder die Schwankungsbreite hinsichtlich der Ausbringrichtung 22 und/oder der Ausbringgeschwindigkeit sowie der radialen Ausbringposition zu verringern.

Erfindungsgemäß wird vorgeschlagen, an einer Führungsfläche einen Unterdruckbereich vorzusehen, über den die vereinzelten Körner an die Führungsfläche gesaugt werden (oder zumindest in Richtung derselben gesaugt werden). Hierbei umfasst der "Unterdruckbereich" auch ein entsprechendes Druckgefälle, welches mit einem in Richtung der Führungsfläche wirkenden Überdruck gebildet ist. Demgemäß basiert die erfindungsgemäße Ausgestaltung auf dem Grundgedanken, das Korn beispielsweise im Bereich des Kammerrads nicht lediglich sich selber zu überlassen und mit der Kammer des Kammerrads und der Führungsfläche des Gehäuses ausschließlich eine räumliche Begrenzung hinsichtlich der Position des Korns vorzugeben, sondern eine gezielte pneumatische Führungskraft zu erzeugen, die dann (unter Umständen zusätzlich zu der auf das Korn einwirkenden Gewichtskraft) auf das Korn einwirkt. Hierbei kann die eingesetzte Führungsfläche beliebig ausgebildet sein, sofern diese das Korn in eine gewünschte Position, Richtung oder Bewegung beeinflusst.

In bevorzugter Ausgestaltung ist ein Abgabebereich vorhanden, über den zuvor vereinzelte Körner (bspw. nach Vereinzelung durch ein Vereinzelungsorgan wie eine Lochscheibe, welches stromaufwärts des Flusses der Körner angeordnet ist) einer Ausbringeinrichtung zum Ausbringen der vereinzelten Körner zugeführt werden. Erfindungsgemäß sind die Ausbringeinrichtung und die Führungsfläche der Ausbringeinrichtung mit der mindestens einen Öffnung, Ausnehmung, der mindestens einen Nut oder dem mindestens einen Schlitz räumlich und funktional getrennt von dem Vereinzelungsorgan ausgebildet und angeordnet und in Förderrichtung der vereinzelten Körner stromabwärts des Vereinzelungsorgans angeordnet.

Im Folgenden werden zwei mögliche alternative oder kumulative Ausgestaltungsformen für die Führungsfläche mit dem Unterdruckbereich erläutert und beschrieben.

Für eine erste Ausgestaltungsform ist die Führungsfläche mit einer gehäusefesten teilzylindrischen Mantelfläche gebildet, welche beispielsweise der Mantelfläche 17 gemäß Fig. 1 entspricht. Entlang dieser Mantelfläche wird ein rotierender Kammerrad-Flügel mit einem vereinzelten Korn bewegt. In diesem Fall ist der Unterdruckbereich der Führungsfläche mit mindestens einer Öffnung der gehäusefesten teilzylindrischen Mantelfläche gebildet, was zur Folge hat, dass das Korn in dem Unterdruckbereich pneumatisch in Richtung der teilzylindrischen Mantelfläche gesaugt wird und unter Umständen an dieser zur Anlage kommt und gehalten wird. Im Rahmen der vorliegenden Erfindung kann im Unterdruckbereich eine beliebige Zahl von Öffnungen beliebiger Querschnittsgestaltung und Größe eingesetzt werden, solange vermieden ist, dass das Korn durch die Öffnung hindurchgesaugt wird. Diese Voraussetzung gewährleistet, dass infolge der teilzylindrischen Mantelfläche das Korn nicht weiter radial nach außen gelangen kann, während der Unterdruck dafür sorgt, dass sich das Korn nicht oder nicht in zu großem Ausmaß radial nach innen bewegt.

Durchaus möglich ist, dass die Öffnungen mit mehreren in Umfangsrichtung hintereinander liegenden Öffnungen, Bohrungen, Perforationen u. ä. gebildet sind. Ebenfalls möglich ist der Einsatz eines porösen Materials für die teilzylindrische Mantelfläche, wobei dann die das Korn ansaugenden Öffnungen von den Poren der teilzylindrischen Mantelfläche gebildet sind. Soll vermieden werden, dass mit der Bewegung des Korns in Umfangsrichtung die Saugkraft variiert, da das Korn in Teilumfangsbereichen durch eine Öffnung angesaugt wird, während in anderen Teilumfangsbereichen zwischen benachbarten Öffnungen die Saugkraft zumindest verringert ist, kann es von Vorteil sein, dass die oder eine Öffnung mit einem Schlitz oder einer Nut ausgebildet ist, dessen oder deren Breite kleiner ist als die Größe des Korns. Hierbei kann die Nut oder der Schlitz in Umfangsrichtung der gehäusefesten zylindrischen Mantelfläche orientiert sein. Ebenfalls möglich ist eine Neigung der Nut oder des Schlitzes gegenüber der Umfangsrichtung der gehäusefesten zylindrischen Mantelfläche, wenn gewünscht ist, dass im Bereich der Ausbringeinrichtung eine axiale Verlagerung des Korn erfolgt. Der Schlitz oder die Nut können beliebige Querschnittsgeometrie und Länge besitzen, wobei die Nutbreite in Umfangsrichtung konstant sein kann oder in Stufen oder kontinuierlich variieren kann, beispielsweise um den auf das Korn wirkenden Saugdruck in Umfangsrichtung zu variieren. Es versteht sich, dass auch mehrere Nuten oder Schlitze in Umfangsrichtung hintereinander liegend sein können.

Zur Bereitstellung des Unterdrucks in der Öffnung, der Nut oder dem Schlitz schlägt die Erfindung vor, dass, beispielsweise in dem Gehäuse, ein mit einem Unterdruck beaufschlagter Druckraum vorhanden ist, welcher über mindestens einen Kanal mit der mindestens einen Öffnung, der Nut oder dem Schlitz verbunden sein kann.

Eine weitere Ausgestaltung der Erfindung macht sich zu Nutze, dass in der Einzelkornausbringeinrichtung unter Umständen für das Vereinzelungsorgan, insbesondere die Lochscheibe, ohnehin ein Unterdruck erforderlich ist, um die Saugöffnungen mit einem Unterdruck zu versorgen. In diesem Fall ist es von Vorteil, wenn der Unterdruckbereich und die Saugöffnungen des Vereinzelungsorgans aus derselben Unterdruckquelle mit Unterdruck versorgt werden. Hierbei ist durchaus möglich, dass die einerseits an dem Unterdruckbereich und andererseits an den Saugöffnungen wirkenden Unterdrücke unterschiedlich sind oder unterschiedlich eingestellt werden können, indem beispielsweise die Verbindung mit der Unterdruckquelle unter Zwischenschaltung unterschiedlicher pneumatischer Verbindungselemente wie Drosseln erfolgt.

Entsprechend einer zweiten Ausgestaltung der Erfindung ist die oder eine Führungsfläche mit einem Kammerrad-Flügel gebildet. In dem Kammerrad-Flügel ist der Unterdruckbereich mit einer Ausnehmung des Kammerrad-Flügels ausgebildet. Diese Ausnehmung besitzt eine Abmessung, die kleiner ist als die Größe des Korns, damit vermieden ist, dass das Korn durch die Ausnehmung des Kammerrad-Flügels hindurchtritt. Die Druckverhältnisse an dem Kammerrad-Flügel sind derart gestaltet, dass der Druck auf der dem Korn zugewandten Seite des Kammerrad-Flügels größer ist als der Druck auf der dem Korn abgewandten Seite des Kammerrad-Flügels, was zur Folge hat, dass das Korn nicht an einer beliebigen Stelle zur Anlage an den Kammerrad-Flügel kommt, sondern gezielt in Richtung des Bereichs der Ausnehmung gesaugt wird und dort zur Anlage an den Kammerrad-Flügel kommt. Anders gesagt werden die Druckverhältnisse in zwei benachbarten Kammern des Kammerrads so gestaltet, dass die in Umfangsbewegungsrichtung vordere Kammer mit einem größeren Druck beaufschlagt ist als die in Umfangsbewegungsrichtung hintere Kammer. Es versteht sich, dass für eine derartige Druckgestaltung in den Kammern beliebige Maßnahmen getroffen sein können.

Durchaus möglich ist auch, dass sowohl eine Führungsfläche mit einem Unterdruckbereich durch eine gehäusefeste teilzylindrische Mantelfläche gebildet ist als auch eine Führungsfläche mit einem Unterdruckbereich im Bereich der Ausnehmung mit einem Kammerrad-Flügel gebildet ist. Besonders vorteilhaft ist es in diesem Fall, wenn automatisch durch die Gestaltung des Unterdruckbereichs im Bereich der teilzylindrischen Mantelfläche der Druck in den Kammern (zumindest in einem Teilumfangsbereich) so gestaltet wird, dass das Korn auch zur Anlage an die Ausnehmung des Kammerrad-Flügels kommt.

Für die Gestaltung der Ausnehmung des Kammerrad-Flügels gibt es vielfältige Möglichkeiten. Es können eine oder mehrere Öffnungen mit beliebigem Querschnitt oder Bohrungen in dem Kammerrad-Flügel vorgesehen sein. Für eine besondere Ausgestaltung ist die Ausnehmung als radial außenliegend randoffener radialer Schlitz oder radiale Nut des Kammerrad-Flügels ausgebildet.

In einer besonderen Ausgestaltung der Erfindung erstreckt sich der untere Druckbereich oder erstreckt sich die Ausbringeinrichtung lediglich über einen Umfangswinkel α von 25° bis 45°, vorzugsweise 30° bis 40°, so dass der "Beruhigungsbereich" gegenüber dem Stand der Technik drastisch verringert ist. Dies ermöglicht neue Ausgestaltungen für die Geometrie der Einzelkornausbringeinrichtung und den möglichen Bereich der Ausbringrichtungen 22, wobei auch ein (weitestgehend) vertikales "Einschießen" des Korns in den Boden ermöglicht sein kann.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einer Öffnung oder Ausnehmung die Rede ist, ist dies so zu verstehen, dass genau eine Öffnung oder Ausnehmung, zwei Öffnungen oder Ausnehmungen oder mehr Öffnungen oder Ausnehmungen vorhanden sein können.

### KURZBESCHREIBUNG DER FIGUREN

Im Folgenden wird die Erfindung anhand in den Figuren dargestellter bevorzugter Ausführungsbeispiele weiter erläutert und beschrieben.
- Fig. 1: zeigt eine Einzelkornsämaschine gemäß dem Stand der Technik DE 35 41 991 A1 in einer teilgeschnittenen Seitenansicht.
- **Fig. 2**: zeigt einen Teilausschnitt einer erfindungsgemäßen Einzelkornausbringeinrichtung in einer geschnittenen Seitenansicht.
- **Fig. 3**: zeigt ein Detail III der Einzelkornausbringeinrichtung gemäß Fig. 2.
- **Fig. 4**: zeigt einen Radialschnitt durch die Ausbringeinrichtung der erfindungsgemäßen Einzelkornausbringeinrichtung gemäß Fig. 2 und 3 ohne ein geführtes Korn.
- **Fig. 5**: zeigt eine Fig. 4 entsprechende Darstellung, hier aber mit einem geführten Korn.

### FIGURENBESCHREIBUNG

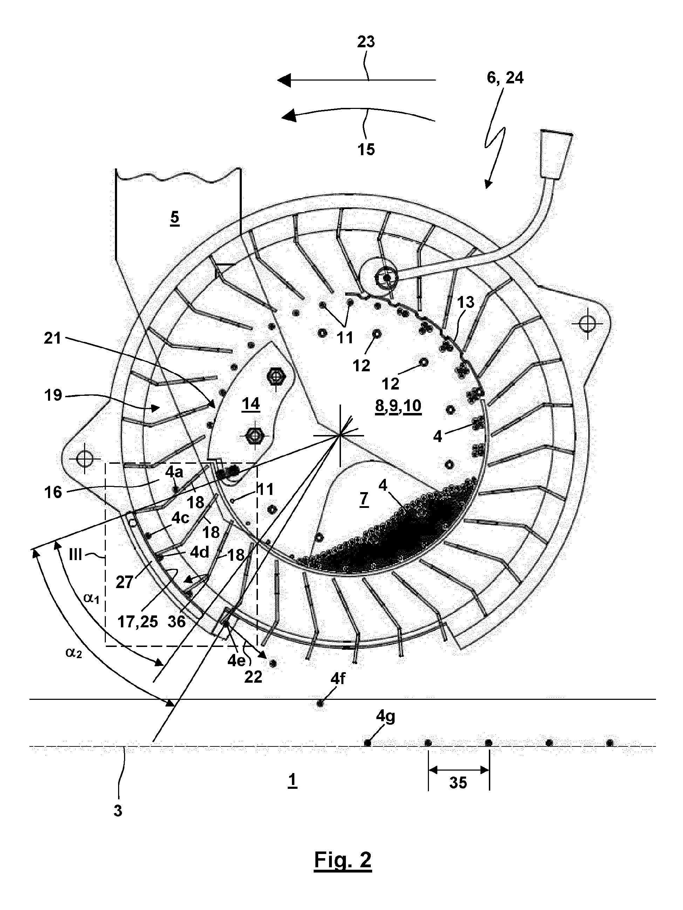

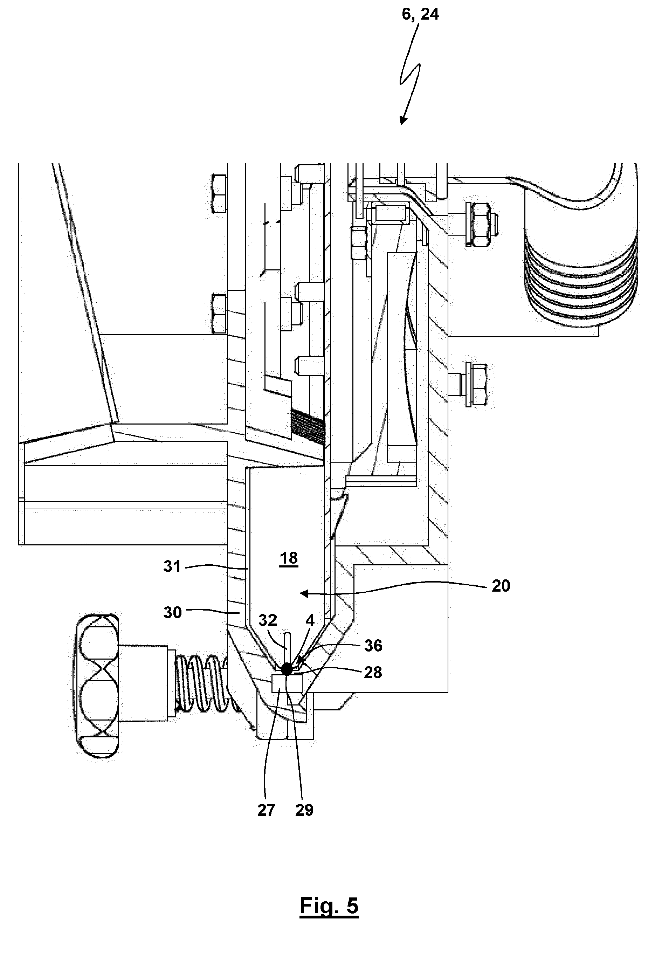

Die in den **Fig. 2 bis 5** dargestellte Einzelkornausbringeinrichtung 24 kann im Wesentlichen bis auf weiteres grundsätzlich der Einzelkornsämaschine 6 gemäß Fig. 1 entsprechen, weshalb in den Fig. 2 bis 5 von der Erfindung betroffene Details dargestellt sind, während andere Aspekte nicht dargestellt sind. Bauelemente, welche hinsichtlich der Funktion und Ausgestaltung den Bauelementen gemäß **Fig. 1** entsprechen, sind hier mit gleichen Bezugszeichen gekennzeichnet, wobei diese u. U. nicht noch einmal beschrieben sind.

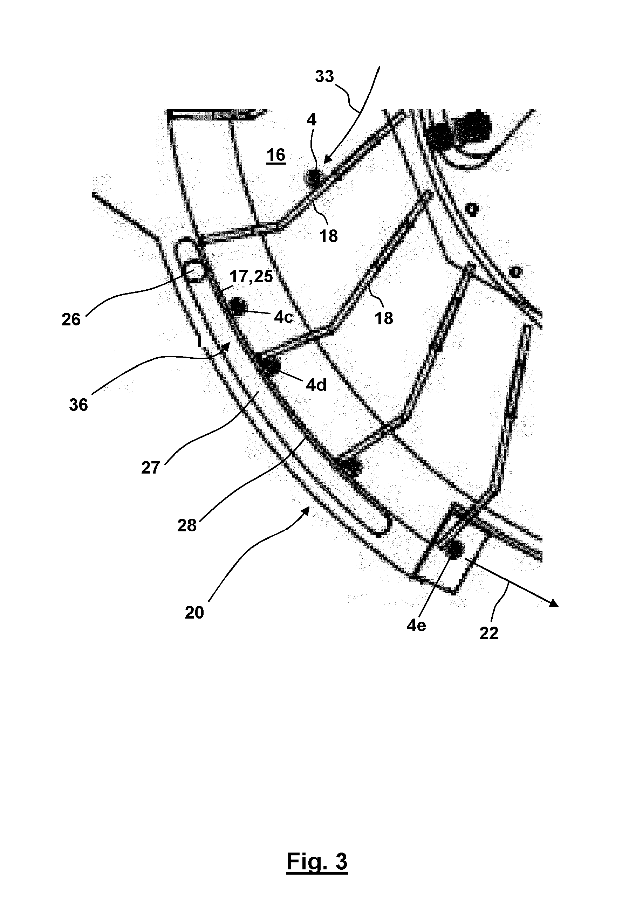

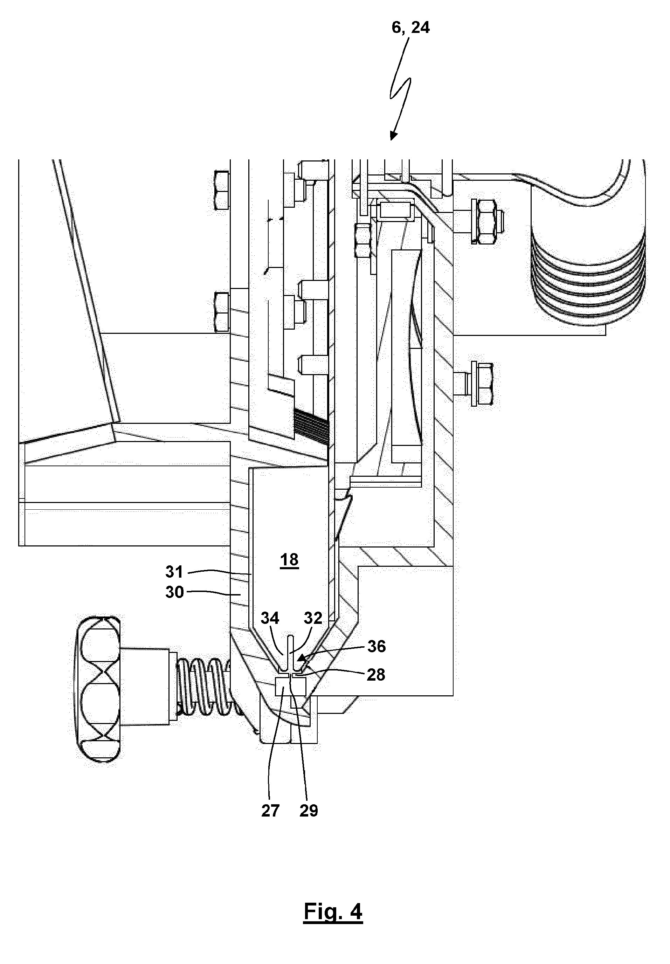

Das Detail III gemäß Fig. 3 zeigt die Ausbringeinrichtung 20. Die Führungsfläche 17 ist als gehäusefeste, zumindest teilweise zylindrische Mantelfläche 25 ausgebildet, die sich über einen Umfangswinkel α₂ erstreckt. Entlang der Mantelfläche 25 bewegen sich, vorzugsweise mit einem sehr kleinen radialen Spalt, die Kammerrad-Flügel 18. Über einen Umfangswinkel α₁ < α₂ erstreckt sich ein aus einer Bohrung oder einem Anschluss 26 mit einem Unterdruck versorgter Druckraum 27, dessen Längsachse konzentrisch zu der Mantelfläche 25 gekrümmt ist. Zwischen dem Druckraum 27 und dem Kammerrad 19 erstreckt sich eine dünne Wandung 28, welche eine konstante Wandstärke in radialer Richtung besitzt und ebenfalls konzentrisch zur Mantelfläche 25 ist. Wie insbesondere in **Fig. 4** zu erkennen ist, ist die Wandung 28 mit einem Schlitz 29 versehen, welcher in Umfangsrichtung verläuft und pneumatisch den Druckraum 27 mit dem Innenraum radial innenliegend der Mantelfläche 25 verbindet. Für das dargestellte Ausführungsbeispiel besitzt der Druckraum 27 einen rechteckigen Querschnitt. Das den Druckraum 27 begrenzende Gehäuse 30 ist, wie ebenfalls in Fig. 4 zu erkennen ist, mittig geteilt. Fig. 4 zeigt darüber hinaus eine Ausgestaltung der Kammerrad-Flügel 18, bei denen die Breite gleichschenklig radial nach außen abnimmt. Entsprechend besitzt auch der Innenraum des Gehäuses 30 eine radial nach außen abnehmende Breite, so dass sich zwischen Gehäuse 30 und Kammerrad-Flügel 18 ein (weitestgehend) konstanter, möglichst kleiner Spalt 31 ergibt.

Die Kammerrad-Flügel 18 besitzen einen randoffenen Schlitz 32, dessen Breite für die Ausführungsform gemäß Fig. 4 konstant ist und etwas größer ist als die Breite des Schlitzes 29. Der Schlitz 32 verbindet benachbarte Kammern 16.

Die erfindungsgemäße Einzelkornausbringeinrichtung 24 arbeitet wie folgt:
In dem Abgabebereich 21 wird durch den Übergeber 14 das Korn 4 von einer zugeordneten Saugöffnung 11 des Vereinzelungsorgans 8, hier in Ausbildung als Lochscheibe 9, gelöst.

Dieses Korn 4 bewegt sich mit einer Bewegung 33 in eine Kammer 16. In der Kammer 16 wird das Korn 4 in dem Umfangswinkelbereich α₁ durch den Schlitz 29 angesaugt, so dass sich das Korn 4c an die Mantelfläche 25 anlegt. Infolge der durch den Schlitz aufgebrachten Saugkraft und der Reibung zwischen der Mantelfläche 25 und dem Korn 4c wird die Bewegung des Korns 4c in Umfangsrichtung zumindest verzögert, was zur Folge hat, dass sich ein in Umfangsbewegungsrichtung hinter dem Korn 4c liegender Kammerrad-Flügel 18 schneller anlegt, als dies für den Stand der Technik gemäß Fig. 1 der Fall ist. Dieser Kammerrad-Flügel 18 nimmt dann das Korn 4d mit. Schließlich kann das Korn 4e mit definierter Ausbringrichtung 22 bei definiertem radialen Abstand von der Rotationsachse des Kammerrads 19 und definierter Ausbringgeschwindigkeit ausgebracht werden.

Gleichzeitig wird durch den Schlitz 32 in dem Kammerrad 18 und das erläuterte Druckgefälle in den benachbarten Kammern 16 gewährleistet, dass das Korn auch in definierter Axialposition durch den Kammerrad-Flügel 18 geführt wird. Der Umgebungsbereich des Schlitzes 32 des Kammerrad-Flügels 18 bildet dann eine Führungsfläche 34 für das Korn 4 im Bereich der Ausbringeinrichtung 20. Die Gestaltung des Querschnitts des Schlitzes 32 erfolgt hier derart, dass ein Ansaugen des Korns im Seitenbereich des Kammerrad-Flügels 18 durch den Spalt 31 möglichst vermieden ist.

Die Ausbildung unterschiedlicher Drücke in benachbarten Kammern 16 kann beispielhaft anhand von **Fig. 3** erläutert werden. Während die vorderste, in Fig. 3 dargestellte Kammer bereits mit der Umgebung verbunden ist, so dass hier der Druck in Richtung des Umgebungsdrucks ansteigt, ist die in Umfangsbewegungsrichtung dahinter liegende Kammer 16 voll mit dem Unterdruck aus dem Druckraum 27 beaufschlagt, was zur Folge hat, dass das Korn an den zwischen diesen beiden Kammern 16 angeordneten Kammerrad-Flügeln 18 angesaugt wird.

Die Schlitze 32 können neben der erläuterten Funktion auch einem Druckausgleich dienen, wenn ein Kammerrad-Flügel 18 die Enden des Schlitzes 29 überfährt und/oder in den Austrittsbereich eintritt. Gemäß Fig. 4 ist der Schlitz 32 in demselben Axialbereich angeordnet wie der Schlitz 29.

Ebenfalls möglich ist, dass infolge der Rotation des Kammerrads 19 die Druckluft durch den Schlitz 32 von einer in Umfangsbewegungsrichtung vorderen Kammer 16 in eine in Umfangsbewegungsrichtung hintere Kammer 16 transportiert wird, wobei dieser Luftstrom das Korn 4 mitnimmt und gegen die Führungsfläche 34 presst.

Durchaus möglich ist auch, dass die Führungsfläche 34 nicht eben ausgebildet ist, sondern zur Erzeugung einer verbesserten Führung oder einer Art Zentrierung V-förmig in Richtung des Schlitzes abgewinkelt ist.

Für das dargestellte Ausführungsbeispiel ist die Wandung 28 einstückig mit dem Gehäuse 30 bzw. den beiden dargestellten Gehäuseteilen ausgebildet. Es versteht sich, dass die Wandung 28 mit dem darin gebildeten Schlitz auch als separates, auswechselbares Bauelement ausgebildet sein kann, so dass mit einem Austausch der Wandung 28 und der Verwendung eines Schlitzes 29 mit einer veränderten Geometrie oder anderweitigen Öffnungen eine Umrüstung der Einzelkornausbringeinrichtung 24 für die Verwendung anderer Körner, bspw. mit abweichenden Durchmessern, erfolgen kann. Dieses kann gemeinsam erfolgen mit dem Auswechseln einer Lochscheibe 9 zu demselben Zweck.

Möglich ist, dass die Druckbeaufschlagung des Druckraums 27 von dem Benutzer manuell verändert werden kann.

Alternativ oder kumulativ ist
a) mit dem mit dem Druckraum 27 mit dem dort herrschenden Unterdruck verbundenen Schlitz 29 und/oder
b) mit dem Schlitz 32 des Kammerrad-Flügels 18
ein Unterdruckbereich 36 gebildet, der die Wirkung hat, dass ein vereinzeltes Korn 4 an eine Führungsfläche angesaugt wird, nämlich gemäß der Variante a) an die Führungsfläche 17, die mit der Mantelfläche 25 gebildet ist, und gemäß Variante b) an die Führungsfläche 34, welche von dem Kammerrad-Flügel 18 ausgebildet ist.

Möglich ist auch, dass der Druckraum 27 mit der Umgebung verbunden ist, während die Kammern 16 mit einem Überdruck beaufschlagt sind, ohne dass hierdurch der Rahmen der Erfindung verlassen wird. Für eine derartige Ausführungsform strömt Druckluft aus dem Inneren durch den Schlitz 29 zu dem Druckraum 27, nimmt das Korn 4 mit und presst dieses dann an die Führungsfläche 17. Diese Ausgestaltung soll insbesondere ebenfalls unter ein "Ansaugen an die Führungsfläche" subsumiert werden. Entscheidend ist für das erfindungsgemäße Konzept, dass ein Druckgefälle mit einem sich in Richtung der Führungsfläche verkleinernden Druck genutzt wird.

Der Winkel α₁ beträgt bspw. 32° (plus/minus 3°), während der Winkel α₂ bspw. 36° (plus/minus 3°) betragen kann. Die Ausbringrichtung 22 ist vorzugsweise um 35° (plus/minus 5°) gegenüber der Horizontalen geneigt. Gegenüber der Horizontalen beginnt der Druckraum 27 vorzugsweise bei einem Umfangswinkel von ca. 19° (plus/minus 6°).

### BEZUGSZEICHENLISTE

- 1: Boden
- 2: Schar
- 3: Furche
- 4: Korn
- 5: Einfülltrichter
- 6: Einzelkornsämaschine
- 7: Vorratsraum
- 8: Vereinzelungsorgan
- 9: Lochscheibe
- 10: Grundkörper
- 11: Saugöffnung
- 12: Mitnehmer
- 13: Abstreifer
- 14: Übergeber
- 15: Bewegungsrichtung
- 16: Kammer
- 17: Führungsfläche
- 18: Kammerrad-Flügel
- 19: Kammerrad
- 20: Ausbringeinrichtung
- 21: Abgabebereich
- 22: Ausbringrichtung
- 23: Fahrtrichtung
- 24: Einzelkornausbringeinrichtung
- 25: Mantelfläche
- 26: Anschluss
- 27: Druckraum
- 28: Wandung
- 29: Schlitz
- 30: Gehäuse
- 31: Spalt
- 32: Schlitz
- 33: Bewegung
- 34: Führungsfläche
- 35: Abstand
- 36: Unterdruckbereich

## Patentansprüche

1. Einzelkornausbringeinrichtung (24) mit einem Abgabebereich (21), in dem von einem Vereinzelungsorgan (8) vereinzelte Körner (4) einer Ausbringeinrichtung (20) zum Ausbringen vereinzelter Körner (4) zugeführt werden, wobei die Ausbringeinrichtung (20) mindestens eine Führungsfläche (17; 34) besitzt, mit welcher oder welchen die vereinzelten Körner (4) in der Ausbringeinrichtung (20) geführt sind, **dadurch gekennzeichnet, dass** die oder mindestens eine Führungsfläche (17; 34) mit einem Unterdruckbereich (36) ausgestattet ist, welcher durch mindestens eine Öffnung, eine Ausnehmung, eine Nut oder einen Schlitz ein vereinzeltes Korn (4) mit einem Druckgefälle in Richtung der Führungsfläche (17; 34) an die Führungsfläche (17; 34) saugt.

2. Einzelkornausbringeinrichtung (24) nach Anspruch 1 mit
a) einem Vorratsraum (7),
b) einem rotierenden Vereinzelungsorgan (8) mit in Umfangsrichtung verteilten Saugöffnungen (11) zur kontinuierlichen Aufnahme und zum temporären Halten vereinzelter Körner (4) aus dem Vorratsraum (7),
c) einem Abgabebereich (21), in welchem die vereinzelten Körner (4) von dem Vereinzelungsorgan (8) getrennt werden und der Ausbringeinrichtung (20) zugeführt werden.

3. Einzelkornausbringeinrichtung (24) nach Anspruch 1 oder 2, **dadurch gekennzeichnet, dass** die oder eine Führungsfläche (17) mit einer gehäusefesten teilzylindrischen Mantelfläche (25) gebildet ist, entlang welcher ein rotierender Kammerrad-Flügel (18) mit einem vereinzelten Korn (4) bewegt wird, wobei der Unterdruckbereich (36) der Führungsfläche (17) mit mindestens einer Öffnung der gehäusefesten teilzylindrischen Mantelfläche (25) gebildet ist.

4. Einzelkornausbringeinrichtung (24) nach Anspruch 3, **dadurch gekennzeichnet, dass** die Öffnung mit einer Nut oder einem Schlitz (29) ausgebildet ist, deren oder dessen Breite kleiner ist als die Größe eines Korns (4).

5. Einzelkornausbringeinrichtung (24) nach Anspruch 3 oder 4, **dadurch gekennzeichnet, dass** ein mit einem Unterdruck beaufschlagter Druckraum (27) vorhanden ist, welcher über mindestens einen Kanal mit der mindestens einen Öffnung, Nut oder dem Schlitz (29) verbunden ist.

6. Einzelkornausbringeinrichtung (24) nach einem der Ansprüche 2 bis 5, **dadurch gekennzeichnet, dass** der Unterdruckbereich (36) und die Saugöffnungen (11) aus derselben Unterdruckquelle mit Unterdruck versorgt werden.

7. Einzelkornausbringeinrichtung (24) nach einem der vorhergehenden Ansprüche, **dadurch gekennzeichnet, dass** die oder eine Führungsfläche (34) mit einem Kammerrad-Flügel (18) gebildet ist, wobei der Unterdruckbereich (36) mit einer Ausnehmung des Kammerrad-Flügels (18) mit einer Abmessung, die kleiner ist als die Größe des Korns (4), ausgebildet ist, wobei der Druck auf der dem Korn (4) zugewandten Seite des Kammerrad-Flügels (18) größer ist als auf der dem Korn (4) abgewandten Seite des Kammerrad-Flügels (18).

8. Einzelkornausbringeinrichtung (24) nach Anspruch 7, **dadurch gekennzeichnet, dass** die Ausnehmung als Schlitz (32) oder radiale Nut des Kammerrad-Flügels (18) ausgebildet ist, wobei der Schlitz (32) oder die Nut radial außen liegend randoffen ist.

9. Einzelkornausbringeinrichtung (24) nach einem der vorhergehenden Ansprüche, **dadurch gekennzeichnet, dass** sich der Unterdruckbereich (36), der Druckraum (27) und/oder die Ausbringeinrichtung (20) über einen Umfangswinkel (α₁, α₂) im Bereich von 25° bis 45° erstreckt/erstrecken.
